# EUROPEAN PATENT SPECIFICATION

(11) **EP 1 730 885 B1**
(45) Date of publication and mention of the grant of the patent: **14.07.2010**
(21) Application number: 05731564.0
(22) Date of filing: 25.03.2005
(51) Int. Cl.: H04L 12/18, H04L 12/12, H04L 29/06

(54) **Multicasting in wireless networks**
Multicasting in drahtlosen Netwzerken
Multidiffusion dans des réseaux sans fil

(30) Priority: 29.03.2004 US 812660
(43) Date of publication of application: 13.12.2006
(73) Proprietor: Intel Corporation, Santa Clara, CA 95052 (US)
(72) Inventor: STEPHENS, Adrian, Cambridge CB4 8TA (GB)
(74) Representative: Dunlop, Hugh Christopher
(86) International application number: PCT/US2005/010374
(87) International publication number: WO 2005/096548

(56) References cited:
- EP-A- 1 071 296
- EP-A- 1 337 071
- WO-A-03/015439
- US-A- 5 583 866
- US-A1- 2003 231 629
- US-B1- 6 505 052
- "3RD GENERATION PARTNERSHIP PROJECT; TECHNICAL SPECIFICATION GROUP RADIO ACCESS NETWORK; BROADCAST/MULTICAST CONTROL BMC (RELEASE 4)" 3GPP TS 25.324 V4.0.0, March 2001 (2001-03), pages 1-23, XP002191630
- "3RD GENERATION PARTNERSHIP PROJECT; TECHNICAL SPECIFICATION GROUP RADIO ACCESS NETWORK; RADIO INTERFACE FOR BROADCAST/MULTICAST SERVICES (RELEASE 1999)" 3GPP TR 25.925 V3.4.0, March 2001 (2001-03), pages 1-31, XP002191629

## Description

### BACKGROUND OF THE INVENTION.

It is becoming more attractive to distribute information, such as voice and/or video data streams, to multiple client devices using a broadcast or multicast address. Multicast delivery may be used to avoid duplication of transmitted data used by multiple client devices running similar applications.

Unique problems exist in some wireless networks, such as a wireless local area network (WLAN), which can make delivery of multicast information difficult. One such problem is that battery powered wireless devices often implement power saving protocols in which, during some periods, the devices may use a low-power mode or sleep mode in order to reduce power consumption. In this mode, broadcast frames or packets to be delivered to a wireless device are often buffered by a network access station, for example an access point (AP) or base station, and delivered according to a power-saving protocol. The power-saving protocol may coordinate a delivery of the frames or packets to occur during the periods that the wireless device is awake (e.g., not in sleep mode).

Therefore, there may often be a compromise between the delay for delivering data and the power-saving performance of a battery-powered device. This compromise may often be made by the network access point (AP) without any knowledge of the applications, for example programs residing on wireless devices, needing the broadcast information. For multicasting, coordination of power-saving techniques for multiple battery-powered wireless devices may be needed so that individual devices may receive a multicast.

WO-A-03/015439 describes a method for communication of data from a sender to two or more recipients as a broadcast or multicast. The described point-to-multipoint service is carried out as an extension of a cell broadcast service (CBS) in a multilayer protocol system. Data is transmitted to subscriber terminals with discontinuous reception (DRX), which enables reduction of power consumption, using a two-part planning stage. The first, level 1 message is used to signal to the subscriber terminal when messages and/or signalling will actually be transmitted, as well as the resources assigned for the transmission. The second, level 2 message is transmitted with in-band scheduling information together with the actual multicast/broadcast message to subscriber terminals.

US-A-5 583 866 describes a method of delivering broadcast/multicast packets in a frequency hopping local area network. A broadcast/multicast packet includes information indicating that more broadcast/multicast packet are to follow. In this way, the destination devices are informed so that they are not in a power saving mode during transmission of the broadcast beacons.

EP-A-1 337 071 discloses a method and apparatus that uses a time slicing approach to the delivery of packet data. The approach enables power management by mobile terminals.

According to a first aspect, the present invention provides a method as defined in appended claim 1. In accordance with a second aspect, the present invention provides a communication apparatus as defined in appended claim 9.

### BRIEF DESCRIPTION OF THE DRAWING.

Aspects, features and advantages of the present invention will become apparent from the following description of the invention in reference to the appended drawing in which like numerals denote like elements and in which:
Fig. 1 is block diagram of a wireless network according to one embodiment of the present invention;
Fig. 2 is a flow chart detailing a method for delivering and receiving information in a wireless network according to various embodiments of the present invention;
Fig. 3 is a block diagram of an example embodiment for a wireless device adapted to perform one or more of the methods of present invention; and
Fig. 4 is a block diagram of an example embodiment for a network access station adapted to perform one or more of the methods of the present invention.

### DETAILED DESCRIPTION OF THE INVENTION.

While the following detailed description may describe example embodiments of the present invention in relation to wireless networks utilizing Orthogonal Frequency Division Multiplexing (OFDM) modulation, the embodiments of present invention are not limited thereto and, for example, can be implemented using other modulation and/or coding schemes where suitably applicable. Further, while example embodiments are described herein in relation to wireless local area networks (WLANs), the invention is not limited thereto and can be applied to other wireless networks where multicast delivery may presents similar challenges. Such networks specifically include, but are not limited to, wireless metropolitan area networks (WMANs), wireless personal area networks (WPANs) and wireless wide area networks (WWANs).

The following inventive embodiments may be used in a variety of applications including transmitters and receivers of a radio system, although the present invention is not limited in this respect. Radio systems specifically included within the scope of the present invention include, but are not limited to, wireless devices including network devices such as network interface cards (NICs), network adaptors, base stations, access points (APs), gateways, bridges, hubs and cellular radiotelephones. Further, the radio systems within the scope of the invention may include cellular radiotelephone systems, satellite systems, personal communication systems (PCS), two-way radio systems, one-way pagers, two-way pagers, personal computers (PCs), personal digital assistants (PDAs), personal computing accessories (PCAs) and all future arising systems which may be related in nature and to which the principles of the inventive embodiments could be suitably applied.

As used herein, a multicast address designates a device(s) from which multiple user stations could substantially simultaneously obtain information even though the device(s) corresponding to the address may not ultimately be the originating source device as explained further below. Further, a multicast schedule means a schedule for delivery of information from the device(s) corresponding to the multicast address. Accordingly, there is no requirement in the inventive embodiments that more than one station solicit (e.g., via a request), or is selected to receive, transmitted information. In other words, a multicast address and/or multicast schedule could be used for delivery of information to a single device if desired.

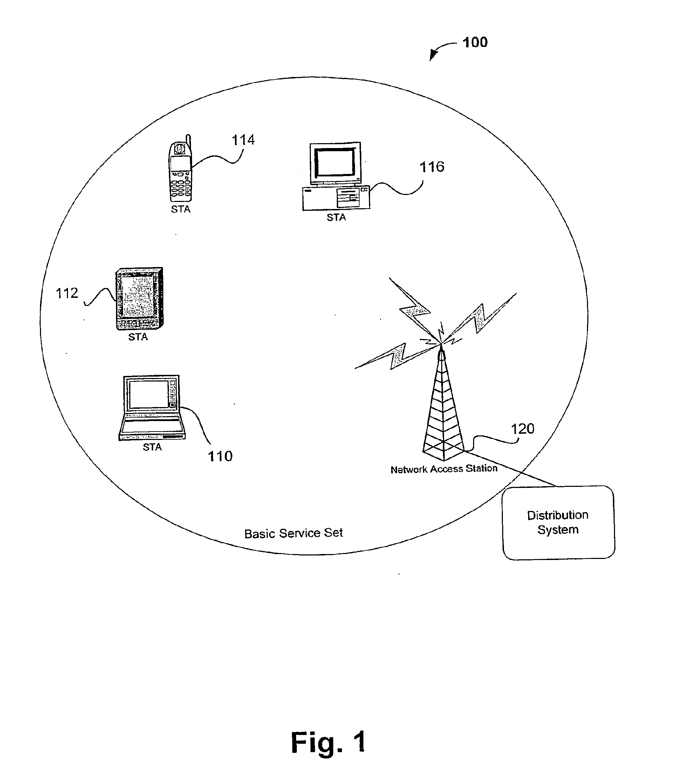

Turning to Fig. 1, a wireless communication system 100 according to one embodiment of the invention may include one or more user stations 110, 112, 114, 116 and one or more network access stations 120. System 100 may be any type of wireless network such as a wireless local area network (WLAN), wireless wide area network (WWAN) or cellular network where user stations 110-116 (also referred to as "clients") communicate with network access station 120 via an air interface.

Depending on the desired implementation, system 100 may further include one or more other wired or wireless network devices as desired, for example additional basic service set (BSS), distribution system (DS) and/or ad-hoc network components. In certain embodiments system 100 may be an adaptive OFDM wireless local area network although the embodiments of the invention are not limited in this respect. OFDM is the modulation currently used in many wireless applications including the Institute of Electrical and Electronic Engineers (IEEE) 802.11 (a) and (g) standards for WLANs.

As previously discussed, battery powered wireless devices such as clients 110, 112 and 114 may utilize power saving protocols where during certain periods, clients 110-114 operate in a low power mode coordinated with network access station 120. In certain WLAN embodiments, one or more of user stations (STAs) (e.g. clients 110-114) and/or network access points (APs) (e.g., 120) may be adapted to provide various quality of service (QoS) levels, although the inventive embodiments are not limited in this respect. QoS stations (QSTAs) and QoS access points (QAPs) may be implemented in network 100 to facilitate the exchange of information using various user priorities (UPs) in order to support applications with QoS requirements.

In one example implementation eight UPs may be identified for each media access control (MAC) service data unit (MSDU) to denote a traffic category (TC) reflecting a QoS level. QoS levels may be negotiated in this example implementation by exchanging QoS characteristics of a data flow to and from non-AP QSTAs. In one embodiment, these QoS characteristics are negotiated as part of a traffic specification (TSPEC) however; the embodiments of the invention are in no way limited to this example. A TSPEC describes the traffic characteristics and QoS requirements of a traffic stream (TS). The main purpose of a TSPEC is to reserve resources within an AP (sometimes referred to a hybrid coordinator (HC) ) and modify its scheduling behavior. While TSPEC requests and responses are used in certain example implementations of the inventive embodiments as described below, the present invention is not limited to any specific protocols or message formats for communications and scheduling between various user stations and network access stations.

Although detailed QoS configurations are not relevant to the scope of this disclosure, the general capability for network 100 to oblige various QoS levels based on exchanged information such QoS or priority identifiers contained in a TSPEC may provide benefits for transfer of certain media types (e. g. streaming audio and/or video data) often associated with multicasting.

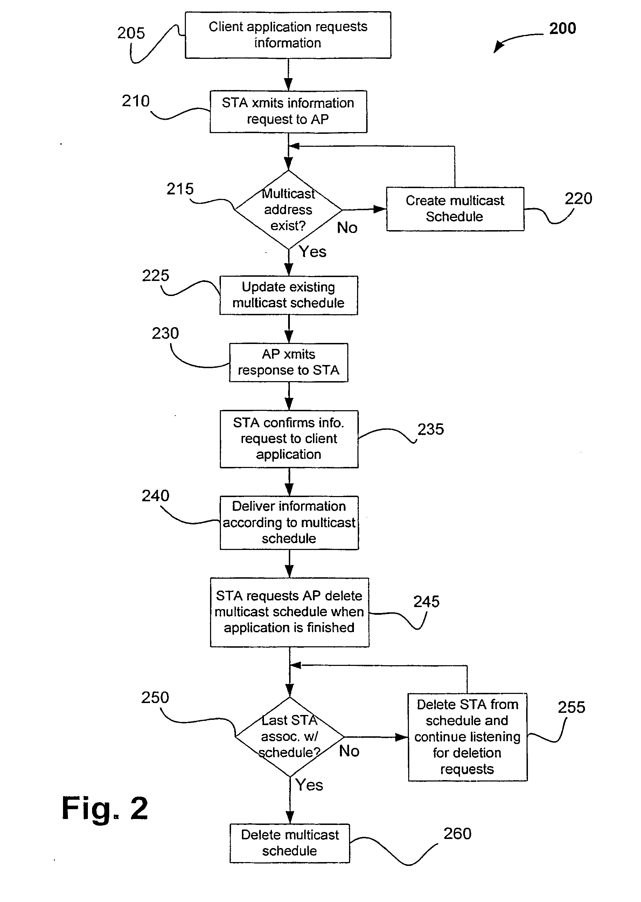

Turning to Fig. 2, a process 200 for sending and receiving multicast information in a wireless network may generally include a user station (STA) sending 210 a request for delivery of the information and delivering 240 the information from an access point (AP) to the STA according to a multicast schedule.

In certain example scenarios a client or station (STA) may be running an application program that may require information from the network. For instance, and by way of example only, an application may need to receive streaming video data from the network. In this example, according to the present invention, the application may request 205 creation of a schedule for delivery of the information. The request may include a specific address for the source of the information and certain QoS attributes desired for receiving the information.

The STA may then transmit 210 the request to an AP for processing. In one WLAN example, the STA media access controller (MAC) may generate the request, for example, including a multicast address and desired QoS attributes as part of a transmission specification (TSPEC) request which is sent via the air interface to the AP.

The AP may receive the request and schedule delivery of the information to meet the request 240. In one example implementation, the AP MAC may generate an indication of the TSPEC request (TSPEC indication) which may include the multicast address if present in the request. An AP management entity may use the SPEC indication from the AP MAC to determine 215 whether the multicast address already exists in its stored schedule (s). If the multicast address does not exist, a multicast schedule for the multicast address may be created 220. On the other hand, if the multicast address does exist, the corresponding schedule may be updated 225 to include the requesting device for delivery of information. According to the invention, creation of a multicast schedule may involve determining a transmission schedule which accommodates delivery of the information using the requested QoS attributes considering the APs other scheduling commitments (e.g., other SPECS and/or beacon transmissions).

The AP may then notify 230 the requesting station of the scheduled delivery, using for example a TSPEC response or other type of response. In this case the STA MAC receiving the response confirms 235 the scheduled delivery of information to the application layer and coordinates the power-saving protocol of the device to ensure the STA is awake to receive the multicast data according to the AP defined multicast schedule.

Once a multicast schedule is created the ultimate source of the information (e.g., a network device sending a media stream to the AP) can be instructed to send application data packets to the AP's MAC using the multicast address as a destination MAC address if desired. The AP's MAC may buffer the received packets until the scheduled time and deliver 240 them to the requesting STAs substantially as scheduled.

Optionally, process 200 may further include actions for removing multicast schedules after the requested application data packets have been sent or are no longer needed. These actions may include each STA involved in a multicast sending 245 a schedule deletion request, preferably including the multicast address, when the application no longer needs or has finished receiving the information. When a deletion request is received by the AP, the AP references the multicast schedule by the included multicast address and determines 250 whether the requesting STA is the last station associated with the identified multicast schedule. If not, the requesting STA may be removed or deleted 255 from the multicast schedule and the AP maintains the multicast schedule in memory. If the received schedule deletion request is associated with the last remaining STA identified for the multicast schedule, the AP may delete 260 the multicast schedule. In certain embodiments, the schedule deletion request may be composed as a TSPEC request similar to that previously described if desired. Alternatively and/or additionally, the AP management entity may be configured to perform an automatic deletion of a multicast schedule after a predetermined time following completion of a multicast. In other embodiments, the AP may monitor the "liveness" of a STA by watching for traffic from the STA, or sending it a packet requiring acknowledgement in order to determine if it is still present. If the AP determines the STA is no longer present, the AP may act as though the STA had requested deletion of the multicast schedule.

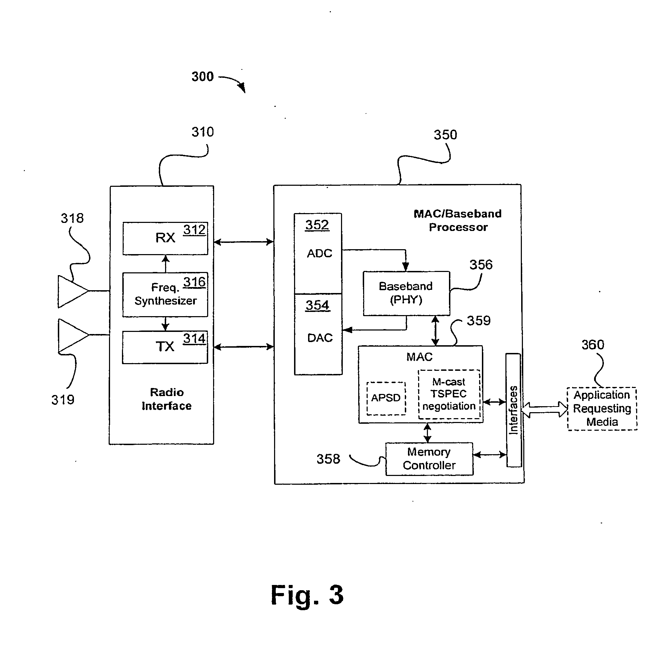

Turning to Fig. 3, an example wireless network apparatus 300 which may receive multicast information according to the various embodiments of the present invention may generally include a radio frequency (RF) interface 310 and a baseband and medium access controller (MAC) processor portion 350. In one example embodiment, RF interface 310 may be any component or combination of components adapted to send and receive multi-carrier modulated signals. RF interface may include a receiver 312, transmitter 314 and frequency synthesizer 316. Interface 310 may also include bias controls, a crystal oscillator and/or one or more antennas 318, 319 if desired. Furthermore, RF interface 310 may alternatively or additionally use external voltage-controlled oscillators (VCOs), surface acoustic wave filters, IF filters and/or RF filters. Various RF interface designs and their operation are known in the art and the description thereof is therefore omitted.

In some embodiments interface 310 may be configured to be compatible with one or more of the Institute of Electrical and Electronics Engineers (IEEE) 802.11 frequency band standards for wireless local area networks (WLAN), however compatibility with other standards could also be implemented. Most preferably, interface 310 is configured for compatibility and/or backward compatibility with the IEEE 802.11 (a-b) (g) and/or (n) standards for WLAN. Baseband and MAC processing portion 350 communicates with RF interface 310 to process receive/transmit signals and may include, by way of example only, an analog-to-digital converter 352 for down converting received signals, a digital to analog converter 354 for up converting signals for transmission, a baseband processor 356 for physical (PHY) layer processing of respective receive/transmit signals, and one or more memory controllers 358 for managing read-write operations from one or more internal and/or external memories (not shown). Processing portion 350 may also include processor 359 for medium access control (MAC)/data link layer processing.

In certain embodiments of the present invention, processor 359 and/or additional circuitry may be adapted to handle requests for network media from an external or internal application 360 and to perform the actions for generating multicast TSPEC requests and/or handling TSPEC responses as described previously (e.g., 210, 235 and/or 245; Fig. 2). Alternatively or in addition, baseband processor 356 may share processing for these functions or perform these processes independent of processor 359. MAC and PHY processing may also be integrated into a single component if desired. Components and/or stored instructions for automatic power-save delivery (APSD) including a separate crystal oscillator (not shown) may also optionally be included as part of apparatus 300.

Apparatus 300 may be implemented as, for example, a battery-powered or alternating current (AC) device and/or network adaptor therefore. Accordingly, the previously described functions and/or specific configurations of apparatus 300 could be included or omitted as suitably desired.

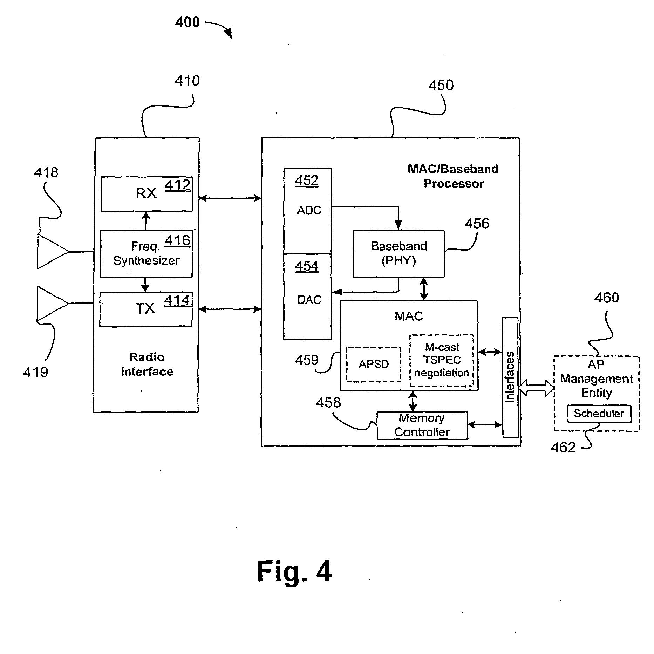

Referring to Fig. 4, a network access apparatus 400 (e.g. 120; Fig. 1) adapted to deliver multicast information in a wireless network is shown. Network access apparatus 400 is similar in nature to apparatus 300 of Fig. 3, and thus corresponding reference numerals may denote similar components. However, apparatus 400 includes, or interfaces with, an AP management entity 460 rather than the client application requesting the network data stream as shown in Fig. 3. AP management entity 460 may be any internal, external or distributed component, combination of components and/or machine readable code, which functions to manage AP performance and/or communications with various STAs including scheduling transmissions for multicast using, for example, scheduler 462. While not shown, apparatus 300 of Fig. 3 may include a similar functioning station management entity (SME).

The components and features of apparatuses 300, 400 may be implemented using any combination of discrete circuitry, application specific integrated circuits (ASICs), logic gates and/or single chip architectures. Further, the features of apparatus 400 may be implemented using microcontrollers, programmable logic arrays and/or microprocessors or any combination of the foregoing where suitably appropriate.

It should be appreciated that the example apparatuses 300, 400 shown in the block diagrams of Figs. 3 and 4 are only one functionally descriptive example of many potential implementations. Accordingly, division, omission or inclusion of block functions depicted in Figs. 3 and 4 does not infer that the hardware components, circuits, software and/or elements for implementing these functions would be necessarily be divided, omitted, or included in embodiments of the present invention.

Embodiments of the present invention may be implemented using single input single output (SISO) systems. However, as shown in Figs. 3 and 4, certain preferred implementations may use multiple input multiple output (MIMO) systems having multiple antennas (e.g., 318, 319; Fig. 3 and 418, 419; Fig. 4). Further, embodiments of the invention may utilize multi-carrier code division multiplexing (MC-CDMA) multi-carrier direct sequence code division multiplexing (MC-DS-CDMA) or any other existing or future arising modulation or multiplexing scheme compatible with the features of the present invention.

Unless contrary to physical possibility, the inventor envision the methods described herein: (i) may be performed in any sequence and/or in any combination; and (ii) the components of respective embodiments may be combined in any manner.

Although there have been described example embodiments of this novel invention, many variations and modifications are possible without departing from the scope of the invention. Accordingly the inventive embodiments are not limited by the specific disclosure above, but rather should be limited only by the scope of the appended claims and their legal equivalents.

## Claims

1. A method of scheduling delivery of information in a wireless local area network between a station and an Access Point, the method comprising:
maintaining a multicast schedule for delivery of information from a multicast address;
at an Access Point, receiving from the station a request for delivery of the information from the multicast address, wherein the request includes the multicast address and quality of service attributes;
determining a transmission schedule according to the quality of service attributes and updating the multicast schedule accordingly; and
sending a response including a scheduled delivery and causing the station to coordinate with a power saving protocol of the station to ensure the station is awake to receive the information according to the multicast schedule.

2. The method of claim 1 further comprising:
sending a response to the station confirming scheduling of the request.

3. The method of claim 1 further comprising:
deleting the multicast schedule after stations associated with the multicast schedule have been sent the information.

4. The method of claim 3 wherein deleting the multicast schedule comprises receiving a deletion request from each client associated with the multicast schedule to delete the multicast schedule.

5. The method of claim 1 wherein the request comprises a transmission specification request.

6. The method of claim 1 wherein the wireless local area network uses orthogonal frequency division multiplexing.

7. The method of claim 2 wherein the response comprises a transmission specification response.

8. The method of claim 1 further comprising:
receiving a request from the station for delivery of information from a further multicast address;
determining whether a multicast schedule exists for the request; and
if not, creating a multicast schedule for delivery of information from the further multicast address.

9. A communication apparatus comprising:
a processing circuit adapted to be able to determine a wireless multicast schedule in accordance with a power saving protocol of a client device, the apparatus comprising:
means for maintaining a multicast schedule for delivery of information from a multicast address;
means for receiving from a client, a request for delivery of the information from the multicast address, wherein the request includes the multicast address and quality of service attributes;
means for determining a transmission schedule according to the quality of service attributes and for updating the multicast schedule accordingly; and
means for sending a response that includes a scheduled delivery which causes the station to coordinate a power saving protocol of the client device to ensure the station connected to the client device is awake to receive the information according to the multicast schedule.

10. The apparatus of claim 9 further comprising: a radio frequency interface coupled with the processing circuit and configured to transmit the wireless multicast according to the schedule determined by the processing circuit.

11. The apparatus of claim 9 wherein the apparatus comprises a wireless local area network access point.

12. The apparatus of claim 9 wherein the processing circuit is adapted to be able to send the schedule to one or more requesting network devices as a transmission specification response.

13. The apparatus of claim 9 wherein the processing circuit is further adapted to be able to buffer application data packets for the wireless multicast until a time indicated on the schedule.

14. The apparatus of claim 10 further comprising at least two antennas coupled to the RF interfaces for enabling multiple input multiple output communications.

15. A communication system comprising: a radio frequency transceiver; at least two antennas electrically coupled to the radio frequency transceiver; and a data processing circuit electrically coupled with the radio frequency transceiver, wherein the data processing circuit comprises the apparatus of claim 9.

16. The communication system of claim 15 wherein the data processing circuit is configured to be able to generate a multicast schedule based on received requests from the multiple client devices.

17. The communication system of claim 16 wherein the requests comprise a transmission specification including a multicast address and a quality of service indicator.

18. The communication system of claim 15 wherein the communication system comprises a wireless local area network access point.

19. A computer readable medium comprising machine readable code which, when executed, performs all the steps of the method of any one of claims 1 to 8.

## Patentansprüche

1. Verfahren zum Planen des Ablaufs der Lieferung von Informationen in einem drahtlosen lokalen Netzwerk zwischen einer Station und einem Zugriffspunkt, wobei das Verfahren umfasst:
Unterstützen eines Multicast-Ablaufplans für das Liefern von Informationen von einer Multicast-Adresse;
an einem Zugriffspunkt Empfang einer Anforderung von der Station für das Liefern der Informationen von der Multicast-Adresse, wobei die Anforderung die Multicast-Adresse und Servicequalitätsmerkmale umfasst;
Bestimmen eines Übertragungsablaufplans entsprechend den Servicequalitätsmerkmalen und dementsprechend Aktualisieren des Multicast-Ablaufplans; und
Senden einer Antwort einschließlich einer ablaufgeplanten Lieferung und Veranlassen, dass sich die Station mit einem Energiesparprotokoll der Station koordiniert, um sicherzustellen, dass die Station betriebsbereit ist, um die Informationen entsprechend dem Multicast-Ablaufplan zu empfangen.

2. Verfahren nach Anspruch 1, ferner umfassend:
Senden einer Antwort an die Station, welche die Ablaufplanung der Anforderung bestätigt.

3. Verfahren nach Anspruch 1, ferner umfassend:
Löschen des Multicast-Ablaufplans, nachdem die Stationen, die mit dem Multicast-Ablaufplan verbunden sind, die Informationen gesendet haben.

4. Verfahren nach Anspruch 3, wobei das Löschen des Multicast-Ablaufplans ein Empfangen einer Löschanforderung von jedem Client umfasst, der mit dem Multicast-Ablaufplan verbunden ist, den Multicast-Ablaufplan zu löschen.

5. Verfahren nach Anspruch 1, wobei die Anforderung eine Übertragungsspezifikationsanforderung umfasst.

6. Verfahren nach Anspruch 1, wobei das drahtlose lokale Netzwerk ein orthogonales Frequenzteilungsmultiplex-Verfahren verwendet.

7. Verfahren nach Anspruch 2, wobei die Antwort eine Übertragungsspezifikationsantwort umfasst.

8. Verfahren nach Anspruch 1, ferner umfassend:
Empfangen einer Anforderung von der Station für das Liefern von Informationen von einer weiteren Multicast-Adresse;
Bestimmen, ob für die Anforderung ein Multicast-Ablaufplan existiert; und
wenn nicht, Erzeugen eines Multicast-Ablaufplans für das Liefern von Informationen von der weiteren Multicast-Adresse.

9. Kommunikationsvorrichtung, umfassend:
eine Verarbeitungsschaltung, die angepasst ist, in der Lage zu sein, einen drahtlosen Multicast-Ablaufplan entsprechend einem Energiesparprotokoll eines Client-Geräts zu bestimmen, wobei die Vorrichtung umfasst:
Mittel zum Unterstützen eines Multicast-Ablaufplans für das Liefern von Informationen von einer Multicast-Adresse;
Mittel, um von einem Client eine Anforderung für das Liefern der Informationen von der Multicast-Adresse zu empfangen, wobei die Anforderung die Multicast-Adresse und Servicequalitätsmerkmale umfasst;
Mittel für das Bestimmen eines Übertragungsablaufplans entsprechend den Servicequalitätsmerkmalen und für das Aktualisieren des Multicast-Ablaufplans dementsprechend; und
Mittel für das Senden einer Antwort, die eine ablaufgeplante Lieferung einschließt, welche die Station veranlasst, ein Energiesparprotokoll des Client-Geräts zu koordinieren, um sicherzustellen, dass die mit dem Client-Gerät verbundene Station betriebsbereit ist, um die Informationen entsprechend dem Multicast-Ablaufplan zu empfangen.

10. Vorrichtung nach Anspruch 9, ferner umfassend: eine Funkfrequenzschnittstelle, die mit der Verarbeitungseinheit verbunden und konfiguriert ist, das drahtlose Multicast entsprechend dem Ablaufplan zu übertragen, der durch die Verarbeitungseinheit bestimmt wird.

11. Vorrichtung nach Anspruch 9, wobei die Vorrichtung einen Zugriffspunkt zum drahtlosen lokalen Netzwerk umfasst.

12. Vorrichtung nach Anspruch 9, wobei die Verarbeitungseinheit angepasst ist, in der Lage zu sein, den Ablaufplan an ein oder mehrere anfordernde Netzwerkgeräte als eine Übertragungsspezifikationsantwort zu senden.

13. Vorrichtung nach Anspruch 9, wobei die Verarbeitungseinheit ferner angepasst ist, in der Lage zu sein, die Anwendungsdatenpakete für das drahtlose Multicast bis zu einem Zeitpunkt zwischenzuspeichern, der im Ablaufplan angezeigt ist.

14. Vorrichtung nach Anspruch 10, ferner mindestens zwei Antennen umfassend, die mit den HF-Schnittstellen verbunden sind, um Mehrfacheingang-Mehrfachausgang-Kommunikationen zu erlauben.

15. Kommunikationssystem, umfassend: einen Funkfrequenz-Sendeempfänger; mindestens zwei Antennen, die elektrisch mit dem Funkfrequenz-Sendeempfänger verbunden sind; und eine Datenverarbeitungsschaltung, die elektrisch mit dem Funkfrequenz-Sendeempfänger verbunden ist, wobei die Datenverarbeitungsschaltung die Vorrichtung nach Anspruch 9 umfasst.

16. Kommunikationssystem nach Anspruch 15, wobei die Datenverarbeitungsschaltung so konfiguriert ist, dass sie in der Lage ist, auf der Grundlage der von den mehreren Client-Geräten empfangenen Anforderungen einen Multicast-Ablaufplan zu erstellen.

17. Kommunikationssystem nach Anspruch 16, wobei die Anforderungen eine Übertragungsspezifikation einschließlich einer Multicast-Adresse und eines Servicequalitätsanzeigers umfasst.

18. Kommunikationssystem nach Anspruch 15, wobei das Kommunikationssystem einen Zugriffspunkt zum drahtlosen lokalen Netzwerk umfasst.

19. Computerlesbares Medium, das einen maschinenlesbaren Code aufweist, der bei einer Ausführung alle Schritte des Verfahrens nach einem der Ansprüche 1 bis 8 ausführt.

## Revendications

1. Procédé de programmation de distribution d'informations dans un réseau local sans fil entre une station et un point d'accès, le procédé comprenant les étapes :
conserver un programme de multidiffusion pour la distribution d'informations à partir d'une adresse de multidiffusion ;
au niveau d'un point d'accès, recevoir de la station une demande de distribution des informations à partir de l'adresse de multidiffusion, la demande comprenant l'adresse de multidiffusion et les propriétés de qualité de service ;
déterminer un programme de transmission, selon les propriétés de qualité de service et mettre à jour le programme de multidiffusion en conséquence ; et
envoyer une réponse comprenant une distribution programmée et assurer la coordination de la station avec un protocole de gestion d'énergie de la station pour s'assurer que la station est prête à recevoir les informations selon le programme de multidiffusion.

2. Procédé selon la revendication 1, comprenant en outre l'étape :
envoyer une réponse à la station confirmant la programmation de la demande.

3. Procédé selon la revendication 1, comprenant en outre à l'étape :
effacer le programme de multidiffusion une fois que les informations ont été envoyées aux stations associées au programme de multidiffusion.

4. Procédé selon la revendication 3, dans lequel la suppression du programme de multidiffusion comprend la réception d'une demande de suppression de chaque client associé au programme de multidiffusion pour supprimer le programme de multidiffusion.

5. Procédé selon la revendication 1, dans lequel la demande comprend une demande de spécification de transmission.

6. Procédé selon la revendication 1, dans lequel le réseau local sans fil utilise le multiplexage par répartition en fréquence orthogonal.

7. Procédé selon la revendication 2, dans lequel la réponse comprend une réponse de spécification de transmission.

8. Procédé selon la revendication 1, comprenant en outre l'étape :
recevoir une demande de la station de distribution des informations à partir d'une autre adresse de multidiffusion ;
déterminer si un programme de multidiffusion existe pour la demande ; et si ce n'est pas le cas, créer un programme de multidiffusion pour délivrer des informations à partir de l'autre adresse de multidiffusion.

9. Appareil de communication comprenant :
un circuit de traitement adapté pour pouvoir déterminer un programme de multidiffusion sans fil selon un protocole de gestion d'énergie d'un dispositif client, l'appareil comprenant :
- des moyens pour conserver un programme de multidiffusion pour la distribution d'informations à partir d'une adresse de multidiffusion ;
- des moyens pour recevoir d'un client, une demande de distribution des informations à partir de l'adresse de multidiffusion, la demande comprenant l'adresse de multidiffusion et les propriétés de qualité de service ;
- des moyens pour déterminer un programme de transmission selon les propriétés de qualité de service et pour mettre à jour le programme de multidiffusion en conséquence ; et
- des moyens pour envoyer une réponse qui comprend une distribution programmée qui assure la coordination de la station avec un protocole de gestion d'énergie du dispositif client pour s'assurer que la station connectée au dispositif client est prête à recevoir les informations selon le programme de multidiffusion.

10. Appareil selon la revendication 9, comprenant en outre une interface radiofréquence couplée au circuit de traitement et configurée pour transmettre la multidiffusion sans fil selon le programme déterminé par le circuit de traitement.

11. Appareil selon la revendication 9, dans lequel l'appareil comprend un point d'accès de réseau local sans fil.

12. Appareil selon la revendication 9, dans lequel le circuit de traitement est adapté pour pouvoir envoyer le programme à un ou plusieurs dispositifs de réseau demandeurs sous la forme d'une réponse de spécification de transmission.

13. Appareil selon la revendication 9, dans lequel le circuit de traitement est en outre adapté pour pouvoir mettre en tampon des paquets de données d'application pour la multidiffusion sans fil jusqu'à un moment indiqué sur le programme.

14. Appareil selon la revendication 10, comprenant en outre au moins deux antennes couplées aux interfaces RF pour permettre des multiples communications à entrées multiples sorties multiples.

15. Système de communication comprenant : un émetteur-récepteur radiofréquence ; au moins deux antennes couplées électriquement à l'émetteur-récepteur radiofréquence et un circuit de traitement de données couplé électriquement à l'émetteur-récepteur radiofréquence, dans lequel le circuit de traitement de données comprend l'appareil de la revendication 9.

16. Système de communication selon la revendication 15, dans lequel le circuit de traitement de données est configuré pour pouvoir générer un programme de multidiffusion sur la base de demandes reçues des multiples dispositifs clients.

17. Système de communication selon la revendication 16, dans lequel les demandes comprennent une spécification de transmission comprenant une adresse de multidiffusion et un indicateur de qualité de service.

18. Système de communication selon la revendication 15, dans lequel le système de communication comprend un point d'accès de réseau local sans fil.

19. Support lisible par ordinateur comprenant un code lisible par machine qui, lorsqu'il est exécuté, effectue toutes les étapes du procédé selon l'une quelconque des revendications 1 à 8.
